# EUROPEAN PATENT SPECIFICATION

(11) **EP 0 511 616 B1**
(45) Date of publication and mention of the grant of the patent: **11.09.1996**
(21) Application number: 92107156.9
(22) Date of filing: 27.04.1992
(51) Int. Cl.: A44B 19/26, B29C 65/56

(54) **Slider with yoke for slide fastener and its joining method**
Reissverschlussschieber mit Joch und Verfahren zu dessen Verbindung
Curseur à capot pour fermeture à glissière et son procédé d'assemblage

(30) Priority: 27.04.1991 JP 125046/91; 25.10.1991 JP 306998/91
(43) Date of publication of application: 04.11.1992
(73) Proprietor: YKK CORPORATION, Chiyoda-ku, Tokyo (JP)
(72) Inventor: Yoshida, Hiroshi, Kurobe-shi, Toyama-ken (JP); Keyaki, Keiichi, Kurobe-shi, Toyama-ken (JP); Kanamaru, Hisanobu, Katsuta-shi, Ibaragi-ken (JP); Ichikawa, Nobuhiro, Namerikawa-shi, Toyama-ken (JP)
(74) Representative: Patentanwälte Leinweber & Zimmermann

(56) References cited:
- EP-A- 0 390 585
- EP-A- 0 390 685
- FR-A- 837 810
- FR-A- 2 071 122
- FR-A- 2 297 583
- NL-A- 207 274
- PATENT ABSTRACTS OF JAPAN vol. 11, no. 393 (M-654)(2840) 23 December 1987 & JP-A-62 160 225 ( UBE IND LTD ) 16 July 1987
- PATENT ABSTRACTS OF JAPAN vol. 9, no. 229 (M-413)(1952) 14 September 1985 & JP-A-60 083 825 ( HITACHI SEISAKUSHO KK ) 13 May 1983

## Description

### Background of the Invention

### 1. Field of the Invention

This invention relates to a slider for opening or closing a slide fastener, particulary a slider with a yoke which is firmly joined to a pull tab supporting face of a slider body, and an assembling method for firmly joining the yoke to the slider body.

### 2. Prior Art

There have hitherto been proposed the yokes attached to the sliders which have functions for supporting a pull tab and for holding and covering a finger tip inserted into a slider and a leaf spring imparting resilience to the finger tip or being formed integral with the finger tip.
The conventional yoke joining means have been disclosed for example, in JP, Y no.62-41608 (Japanese Utility Model Publication) and in JP, B no.53-27653 (Japanese Patent Publication).

In the former, the front and rear support posts formed in the slider body are respectively provided with locking grooves. The yoke portions opposite to the locking grooves are clamped and pressed by use of a punch from the outward position to attach or join the yoke and the support posts to each other.

In the latter, the support posts are also provided with the locking grooves. Then, parts of the yoke for covering the support posts are deformed by the punch and interengaged with the recesses to provide the combination between the support posts and the yoke.

In the above-mentioned conventional joining means, since the external face of the yoke is processed by the punch, the punch leaves traces on the external face of the yoke. When the parts of the yoke are deformed, the punch depressions are produced on the external face of the yoke and the thickness of the deformed parts becomes thin. The depression due to the punch looks like injury to become less attractive in appearance. Accordingly, when the slide fastener with the slider is attached to a high class bag, the commercial value is considerably reduced. The thinned parts due to the deformation become less reliable in attachment strength and poor durability.

### Summary of the Invention

It is therefore an object of this invention to overcome the above-mentioned disadvantages and to provide a novel slider with a yoke for a slide fastener and its assembling method for firmly and stably joining a yoke to a slider body in combination by plastic flow.

An other object of this invention is to provide a novel and improved slider with a yoke for a slide fastener and its assembling method wherein the yoke can be joined to support posts of a slider body without leaving depressions on the external face of the yoke thereby to be attractive in appearance and to produce firm attachment strength and increased durability.

A further object of this invention is to provide an improved method for integrally joining a yoke to a slider body so as to produce an attractive appearance without exposing the joining means and a high joining strength.

An additional object of this invention is to provide an improved method for joining a yoke to support posts of a slider body for a slide fastener, wherein the conventional processing machine and apparatus may be used without requiring a novel machine and apparatus to provide inexpensive and mass production.

A slider with a yoke and a method for integrally joining a yoke to a slider body satisfying the above requirements is characterized in the accompanying claims 1 and 4 and 5, respectively.

The advantages of this invention will be better understood from the following detailed description taken in connection with the accompanying drawings which illustrate by way of example preferred embodiments of this invention.

### Brief Description of the Drawing

Fig. 1 (A) is a sectional view of a slider with a yoke at the state before joining the yoke according to this invention;
Fig. 1 (B) is a sectional view of a slider with a yoke at the state during joining the yoke;
Fig. 1 (C) is a sectional view of a slider with a yoke at the state after joining the yoke;
Fig. 2 (A) is a sectional view of a slider with a yoke at the state before joining the yoke in a modification according to this invention;
Fig. 2 (B) is a sectional view of a slider with a yoke at the state during joining the yoke;
Fig. 2 (C) is a sectional view of a slider with a yoke at the state after joining the yoke;
Fig. 3 (A) is a sectional view of a slider with a yoke at the state before joining the yoke in a further modification according to this invention;
Fig. 3 (B) is a sectional view of a slider with a yoke at the state during joining the yoke;
Fig. 3 (C) is a sectional view of a slider with a yoke at the state after joining the yoke.
Fig. 4 is an exploded and perpective view of a slider with a yoke joining means according to this invention.
Fig. 5 is a perspective view of a slider with a yoke joining means according to this invention;
Fig. 6 (A) is a sectional view of a yoke joining means of a slider in an other modification of this invention at the state that support posts are covered with the yoke;
Fig. 6 (B) is a main sectional view of a slider of this invention to which a yoke is also joined;
Fig. 7 is a main sectional view of a yoke joining means of a slider to which a yoke is also joined in the other modification of this invention;
Fig. 8 is a main sectional view of a yoke joining means of a slider to which a yoke is joined in the further modification of this invention;
Fig. 9 is an exploded and perspective view of a slider with a yoke joining means according to this invention;
Fig.10 is a side view of the further modification of the yoke joining means according to this invention;

### Detailed Description of the Invention

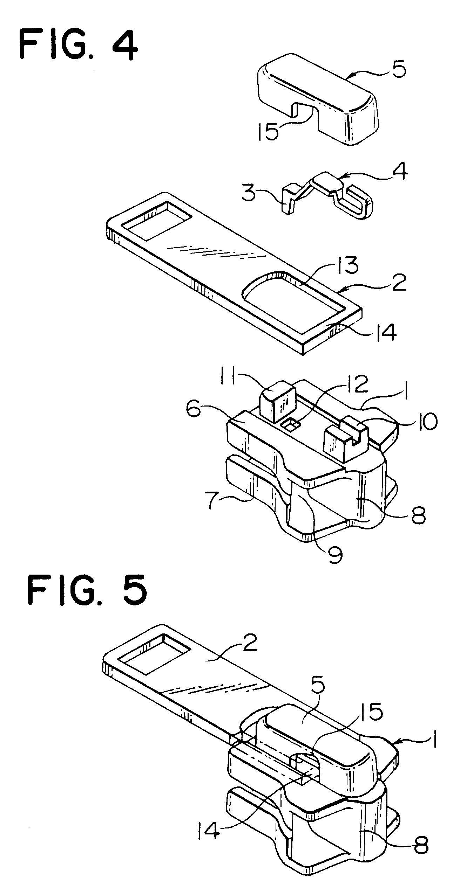

Referring now to a slider according to this invention, as shown in Fig.4 and Fig.5, this slider comprises a slider body 1, a pull tab 2, a leaf spring 4 with a finger tip 3 and a yoke 5.

The slider body 1 comprises a pair of parallelly disposed upper and lower wings 6 and 7, a Y-shaped element guide channel 9 formed between the upper and lower wings 6 and 7, a connection post 8 disposed in the end of the slider body and formed integral with the upper and lower wings 6, 7, support posts 10 and 11 integrally projected from the front and rear positions of the upper wings 6, and an aperture 12 for receiving a finger tip 3 of a leaf spring 4 to be guided into the element guide channel 9. The slider body 1 is manufactured in a press forming process or a die cast forming process.

The pull tab 2 is made of a plate material and has a trunnion 14 formed in one end side of the pull tab 2 and a large aperture 13 formed in the end portion. The trunnion 14 is put between the both front and rear support posts 10, 11 of the slider body 1. The pull tab 2 is turned forward and rearward about the pivotal trunnion 14 set in an opening 15 of a yoke 5.

A leaf spring 4 is composed of an inverted U-shaped front portion, a flat central portion, and a finger tip 3 projected downwardly in the rear portion. This leaf spring 4 is also put between the both front and rear support posts 10 and 11 of the slide body 1 to cross over the trunnion 14 of the pull tab 2. Then, the finger tip 3 of the leaf spring 4 is inserted into aperture 12 opened to the slider body 1.

The yoke 5 is formed of a hollow cap opened downwardly and U-shaped in the cross section to cover both the front and rear support posts 10, 11. The yoke 5 is provided with openings 15 which are opened in the longitudinal central sides of the yoke 5 to set the trunnion 14 of the pull tab 2 therein.

The slider is basically constituted generally in the same construction to the conventional slider, and this invention relates to a novel construction for joining the yoke 5 and the front and rear support posts 10, 11. The joining construction according to this invention will be illustrated in detail thereinafter.

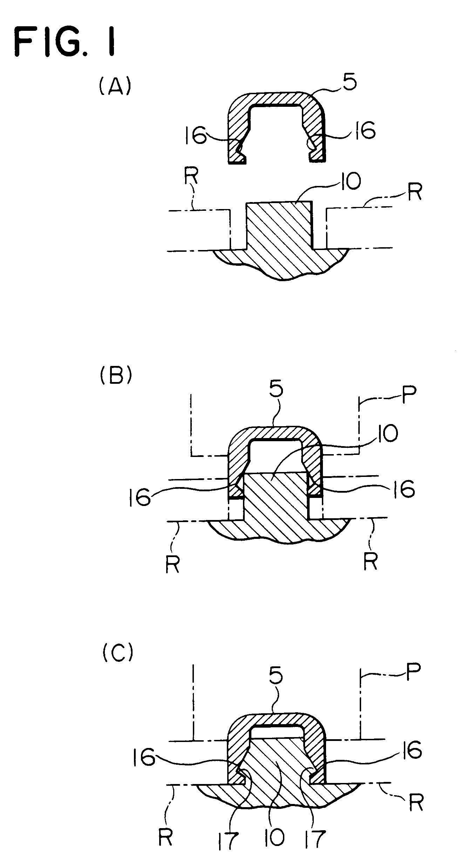

As shown in Fig. 1 (A), the yoke 5 is provided with V-shaped locking grooves 16 which are formed on the internal side faces thereof along the whole longitudinal direction thereof or only opposite to the front and rear support posts 10, 11. The opened lower end of the yoke 5 is formed approximately at the same width as the support posts 10, 11, so that the support posts 10, 11 are engaged in the yoke without resistance. In the hollow yoke 5, the internal wall extended upwardly from the bottom is inclined outwardly to the maximum depth of the V-shaped groove and reversely or inwardly from the maximum depth. In the upper portion of the inclined wall, the hollow space is formed at the narrower width than that of the support posts 10, 11. The yoke 5 is made if the material having the approximate same hardness as the material of the support posts 10, 11 or the slider body 1, and preferably made of the material having the higher hardness than that of the support posts.

The yoke 5 is joined to the front and rear support posts 10, 11 and since the joined states of the support posts 10, 11 are the same states, only the support post 10 is illustrated in Fig. 1 (B) and Fig. 1(C).

As the aforementioned, the internal space of the yoke 5 is formed at the narrower width than that of the support post 10, so that when the yoke 5 is engaged with the support post, it is inserted only up to the intermediate portion of the support post 10. Then, when the press force is applied to the yoke 5 from the upward position thereof by use of a punch P, the yoke 5 is forcibly urged toward the support post 10 to be spread outwardly.

Therefore, while the both sides of the yoke 5 are held by means of holder tools R, the yoke 5 is forcibly urged to the support post 10. Then, the support post 10 resuslts in the plastic deformation to narrow the upper end portion of the support post 10 so as to insert the upper portion of the support post into the upward space of the yoke 5. Moreover, the extra material produced when narrow, is squeezed into both right and left locking grooves 16 of the yoke 5. In this process, bulged portions 17 are formed in the locking grooves 16 from the support post 10 to join the yoke 5 firmly to the support post 10 in accordance with the engagement of the bulged portions 17 and the locking grooves 16.

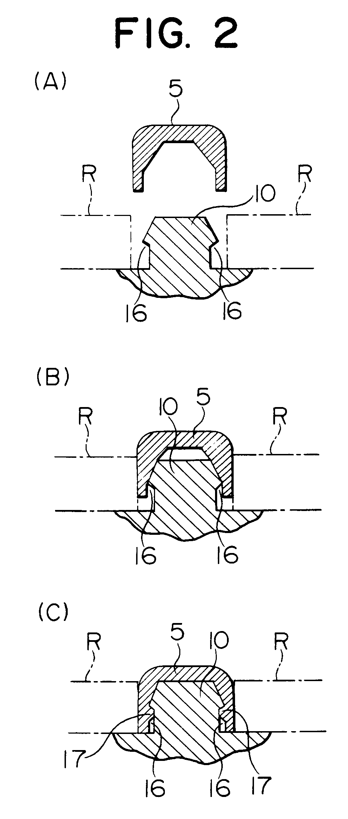

As shown in Fig. 2 (A), the support post 10 is provided with the locking grooves 16, and the other support post 11 is omitted in the illustration. The head portion of the support post 10 is inclined outwardly toward the both sides and the lower portion of the support post 10 serves to form the locking groove 16. The support posts 10, 11 are preferably made of the material having the higher hardness.

The opening lower end of the yoke 5 is formed at the approximate same width as the widest head portion of the support post 10, and the hollow space of the yoke 5 is formed to gradually narrow the width from the intermediate position in the vertical direction.

In joining the yoke 5 to the slider body 1, as shown in Fig. 2 (B) and Fig. 2 (C), after the yoke 5 is engaged with the support post 10, a press force is applied to the yoke 5 by use of the punch (not shown). The head portion of the support post 10 is forcibly urged into the yoke 5 to flow the material of the yoke 5 into the locking grooves 16 of the support post 10 in the plastic flow operation, so that the plastic-deformed bulged portions 17 are formed on internal faces of the yoke 5 to firmly join the yoke 5 and the slider body 1 each other. Then, the yoke 5 is held by holder tools R from the both sides to prevent the deformation of the shape thereof.

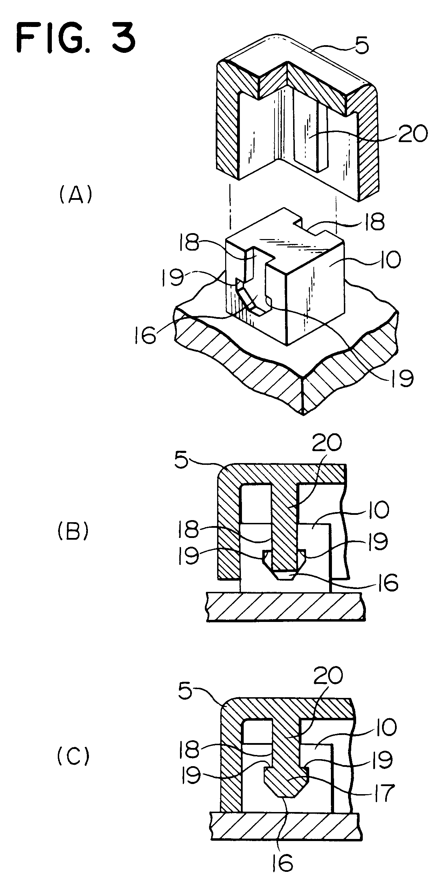

Moreover, as shown in Fig. 3 (A), the support post 10 is provided with concave grooves 18 and locking grooves 16 and the other support post 11 is omitted in the illustration. The concave grooves 18 are formed on the both sides of the support post 10 in the up and down direction thereof. The locking grooves 16 are continuously connected to the concave grooves 18 and are provided with shoulders 19 extended toward the both sides. The individual locking groove is formed of the wide upper portion and the taper lower portion which is gradually tapered from the shoulder in accordance with reaching downward.

In an other hand, the internal wall of the yoke 5 opposite to the support post 10 is provided with a linear projection 20 for engaging in the concave groove 18. The linear projection 20 is formed of such length as that it is reached to the lower end of the locking groove 16 and more is urged toward the lower end even if the yoke 5 is contacted to the upper surface of the slider body 1.

In joining the yoke 5 to the slider body 1, as shown in Fig. 3 (B) and (C), when the yoke 5 is engaged in the support post 10, the linear projection 20 of the yoke 5 is led through the concave groove 18 up to the intermediate portion in the locking groove 16. Then, when the press force for pushing the yoke downwardly is applied to the yoke 5, the lower portion of the linear projection 20 results in the plastic deformation and flows to form a bulged portion 17 in the locking groove 16, so that the yoke 5 is integrally engaged with the slider body 1 to be unable to disengage the yoke 5 from the slider body 1. The bulged portion 17 is expanded to the larger width than the width of the linear projection 20. In joining, the yoke 5 is held by holders (not shown) from the both sides to prevent the deformation of the yoke shape.

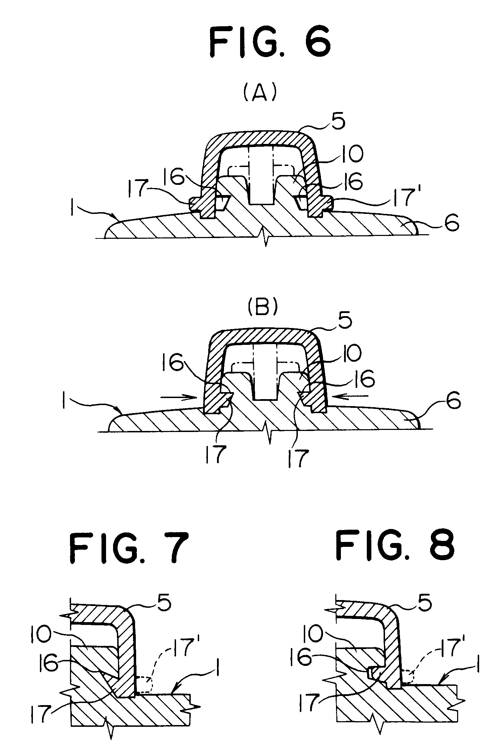

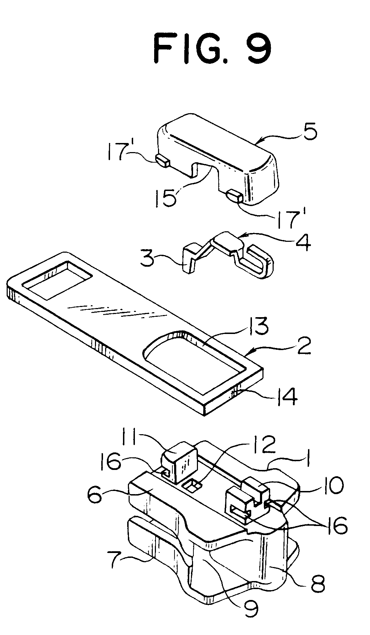

Referring to Fig. 6 and Fig. 9, an individual locking groove 16 is formed in upright faces, particularly in respective both side faces of the front and rear support posts 10, 11 projected from the slider body 1. The locking groove 16 is V-shaped as shown in Fig. 6, or formed as shown in Fig. 7 such that a V-shaped concave portion is inclined upwardly. The acute shaped tip of the locking groove 16 is not always required and may be formed squarely as shown in Fig. 8.

On the other hand, the yoke 5 as shown in Fig. 6 (A) and Fig. 9 is provided with projections 17' which are respectively projected outwardly from the external face of the yoke 5 at the position opposite to the individual locking groove 16 of front support post 10 when the yoke 5 is put and covered on the both front and rear support posts 10, 11 as above-mentioned.

Since the support posts 10, 11 are respectively provided with the locking grooves 16 and the yoke 5 is provided with the projections 17', when the yoke 5 will be assembled to the slider body 1, the yoke 5 covers the slider body 1 as shown in Fig.6 (A) after the trunnion 14 of the pull tab 2 and the leaf spring 4 are put between the front and rear support posts 10 and 11 of the upper wing 6.

After thus covered with the yoke 5, the projections 17' of the yoke 5 are plastic-deformed by press forces (shown by arrows) in the forging process to flow the material of the deformed projections 17' into the locking grooves 16 of the support posts 10, 10, and to form bulged portions 17 therein. Flatten smooth faces on the yoke 5 are finished up, as shown in Fig.6 (B). Then, the material of the yoke 5 is flowed in the locking grooves 16 and firmly contacted with the locking grooves 16 thereby to join the yoke 5 to the front and rear support posts 10, 11 without leaving processing traces on the external face of the yoke 5 so as to provide attractive appearance.

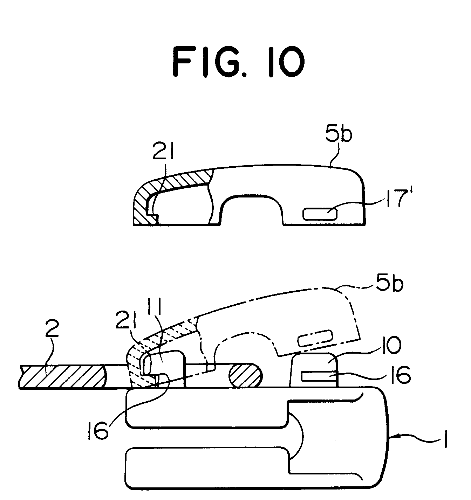

Referring to the slider shown in Fig. 10, both side faces of the front support post 10 are provided with locking grooves 16 and a back face of the rear support post 11 is provided with a locking groove 16. On the other hand, the yoke 5 is provided with a claw 21 for interlocking with the back locking groove 16.
The external face of the yoke 5 is provided with projections 17' opposite to the front locking grooves 16 as well as the embodiment shown in Fig. 6.

In this slider, as shown by chain line in Fig.10, after the claw 21 in the rear side of the yoke 5 is interengaged with the back locking groove 16 of the rear support post 11 and the front portion of the yoke 5 is covered on the front support post 10, the press forces in the forging process are applied to the front projections 17' to join the yoke 5 to the slider body 1.

## Claims

1. A slider for a slide fastener including a slider body (1) and a yoke (5) joined to a pull tab supporting face of said slider body (1) from which front and rear support posts (10, 11) protrude uprightly,
either one of said yoke (5) or said support posts (10, 11) being provided with locking grooves (16) on the contact face,
wherein said yoke (5) covers said support posts (10, 11) and forcibly contacts the side faces of said support posts (10, 11),
**characterized in that** either one of said yoke (5) or said support posts (10, 11) provided with said locking groove (16) is made of a material having at least the same hardness as the one not having said locking groove (16); that the material of either one of said support posts (10, 11) or said yoke (5) not having said locking groove (16) forms a bulged portion (17) which has been formed by plastic deformation and flow in each said locking groove (16); and that the outside of said yoke (5) opposite to each locking groove (16) has a flat smooth surface.

2. A slider with a yoke for a slide fastener according to claim 1 wherein the contact face of said yoke (5) is provided with a locking groove (16) in the longitudinal direction of said yoke (5).

3. A slider with a yoke for a slide fastener according to claim 1, wherein the contact faces of said each support post (10, 11) are provided with concave grooves (18) and downwardly tapered locking grooves (16), said each concave groove (18) being disposed in the up and down direction of said support post (10, 11) and connected through stepped shoulders (19) with said locking groove (16), wherein the contact faces of said yoke (5) are provided with linear bulging portions (20) opposite to the concave grooves (18), and wherein the lower part of said each linear bulging portion forms said bulged portion (17) in said locking groove (16).

4. A yoke joining method of contacting and joining a yoke (5) to front and rear support posts (10, 11) protruding from a slider body (1) of a slider for a slide fastener, said yoke (5) joining method comprising the steps of:
providing locking grooves (16) on contact faces in either one of said yoke (5) or said support posts (10, 11), the one with said locking grooves being of a material of at least the same hardness as the one not having said groove,
forcibly urging said yoke (5) toward said support posts (10, 11) from the upper position thereof while holding both sides of said yoke (5) in the width direction by holders (R) and thereby plastically deforming either one of said support posts (10, 11) or said yoke (5) not having said locking grooves (16) in order to form bulged portions (17) within said locking grooves (16).

5. A yoke joining method of contacting and joining a yoke (5) to front and rear support posts (10, 11) protruded from a slider body (1) of a slider for a slide fastener, said yoke (5) joining method comprising the steps of:
providing locking grooves (16) on the upright faces of said support posts (10, 11),
providing projections (17') on the external faces of the covering yoke (5) opposite of said locking grooves (16) of said support posts (10, 11), and
pressing said projections (17') inwardly so that they flow into said locking grooves (16) after covering said support posts (10, 11) with said yoke (5).

6. A yoke joining method of a slider for a slide fastener according to claim 5, wherein said method comprises the steps of,
forming locking grooves (16) on both side faces in a front support post (10) and a locking groove (16) on a back face in a rear support post (11),
forming a claw (21) in a yoke (5) opposite to the back locking groove (16) of said rear support post (11),
interlocking said claw (21) of said yoke (5) with said locking groove (16) of the back face, and
pressing said projections (17') inwardly so that they flow into said locking grooves (16) of said support posts after covering said both support posts (10, 11) with said yoke (5).

## Patentansprüche

1. Schieber für einen Reißverschluß mit einem Schieberkörper (1) und einer Kappe (5), die mit einer Griffabstützfläche des Schieberkörpers (1) verbunden ist, von der vordere und hintere Stützständer (10, 11) nach oben ragen,
wobei entweder die Kappe (5) oder die Stützständer (10, 11) an der Berührungsfläche mit Sperrnuten (16) versehen sind,
wobei die Kappe (5) die Stützständer (10, 11) bedeckt und die Seitenflächen dieser Stützständer (10, 11) zwangsweise berührt,
dadurch **gekennzeichnet**, daß entweder die Kappe (5) oder die Stützständer (10, 11), die mit der Sperrnut (16) versehen sind, aus einem Material hergestellt sind, das mindestens die gleiche Härte hat wie das die Sperrnut (16) nicht aufweisende Teil; daß das Material der Stützständer (10, 11) oder der Kappe (5), die die Sperrnut (16) nicht aufweist, einen ausgebauchten Bereich (17) bildet, der durch plastische Verformung gebildet wurde und in jede der Sperrnuten (16) eindringt; und daß die jeder Sperrnut (16) gegenüberliegende Außenseite der Kappe (5) eine ebene glatte Oberfläche hat.

2. Schieber mit einer Kappe für einen Reißverschluß nach Anspruch 1, wobei die Berührungsfläche der Kappe (5) mit einer in Längsrichtung der Kappe (5) verlaufenden Sperrnut (16) versehen ist.

3. Schieber mit einer Kappe für einen Reißverschluß nach Anspruch 1, wobei die Berührungsflächen eines jeden Stützständers (10, 11) mit konkaven Nuten (18) und mit sich nach unten verjüngenden Sperrnuten (16) versehen sind, wobei jede konkave Nut (18) in Aufwärts- und Abwärtsrichtung des Stützständers (10, 11) angeordnet und durch abgestufte Schultern (19) mit der Sperrnut (16) verbunden ist, wobei die Berührungsflächen der Kappe (5) mit den konkaven Nuten (18) gegenüberliegenden geradlinigen ausgebauchten Bereichen (20) versehen sind, und wobei der untere Teil jedes geradlinigen ausgebauchten Bereichs den besagten ausgebauchten Bereich (17) in der Sperrnut (16) bildet.

4. Verfahren zum Verbinden einer Kappe (5) mit vorderen und hinteren Stützständern (10, 11), die von einem Schieberkörper (1) eines Reißverschlußschiebers abstehen, umfassend die Schritte:
Anordnen von Sperrnuten (16) in Berührungsflächen entweder der Kappe (5) oder der Stützständer (10, 11), wobei das mit Sperrnuten versehene Teil aus einem Material besteht, das mindestens die gleiche Härte hat wie das keine Sperrnut aufweisende Teil,
zwangsweises Annähern der Kappe (5) zu den Stützständern (10, 11) hin von der oberen Position derselben, während beide Seiten der Kappe (5) in Querrichtung mit Haltewerkzeugen (R) gehalten und dadurch plastisches Verformen entweder der Stützständer (10, 11) oder der Kappe (5), die die Sperrnuten (16) nicht aufweist, um ausgebauchte Bereiche (17) in den Sperrnuten (16) zu bilden.

5. Verfahren zum Verbinden einer Kappe (5) mit vorderen und hinteren Stützständern (10, 11), die von einem Schieberkörper (1) eines Reißverschlußschiebers abstehen, umfassend die Schritte:
Anordnen von Sperrnuten (16) an den aufrechten Flächen der Stützständer (10, 11),
Anordnen von Vorsprüngen (17') an den den Sperrnuten (16) der Stützständer (10, 11) gegenüberliegenden Außenflächen der Kappe (5) und
nach innen Pressen der Vorsprünge (17'), so daß sie in die Sperrnuten (16) eindringen, nachdem die Stützständer (10, 11) mit der Kappe (5) bedeckt wurden.

6. Verfahren zum Verbinden einer Kappe mit einem Reißverschlußschieber nach Anspruch 5, umfassend die Schritte,
Ausbilden von Sperrnuten (16) an beiden Seitenflächen eines vorderen Stützständers (10) und einer Sperrnut (16) an einer hinteren Fläche eines hinteren Stützständers (11),
Ausbilden einer Klaue (21) an einer Kappe (5) gegenüber der hinteren Sperrnut (16) des hinteren Stützständers (11)
Verriegeln der Klaue (21) der Kappe (5) mit der Sperrnut (16) der Rückseite und
nach innen Drücken der Vorsprünge (17') so daß sie in die Sperrnuten (16) der Stützständer eindringen, nachdem beide Stützständer (10. 11) mit der Kappe (5) bedeckt wurden.

## Revendications

1. Curseur pour une fermeture à glissière comprenant un corps (1) de curseur et un capot (5) assemblé à une face de support de tirette dudit corps (1) de curseur d'où font saillie verticalement des piliers de support avant et arrière (10, 11),
soit ledit capot (5) soit lesdits piliers de support (10, 11) étant pourvu(s) de rainures de blocage (16) sur une face de contact,
dans lequel ledit capot (5) recouvre lesdits piliers de support (10, 11) et est mis, de force, en contact avec les faces latérales desdits piliers de support (10, 11),
caractérisé en ce que soit ledit capot (5) soit lesdits piliers de support (10, 11), pourvu(s) de ladite rainure de blocage (16), est (sont) constitué(s) d'une matière ayant au moins la même dureté que ledit capot (5) ou bien lesdits piliers de support non pourvu(s) de ladite rainure de blocage (16); en ce que le matériau soit desdits piliers de support (10, 11) soit dudit capot (5), non pourvu(s) de ladite rainure de blocage (16), forme(nt) une partie dilatée (17) qui a été réalisée par déformation plastique et fluage dans chaque nervure de blocage (16); et en ce que le côté extérieur dudit capot (5), qui est situé en face de chaque rainure de blocage précitée (16), possède une surface plate lisse.

2. Curseur avec un capot pour une fermeture à glissière selon la revendication 1, dans lequel la face de contact dudit capot (5) est pourvue d'une rainure de blocage (16) dans la direction longitudinale dudit capot (5).

3. Curseur avec un capot pour une fermeture à glissière selon la revendication 1, dans lequel les faces de contact de chaque pilier de support (10, 11) sont pourvues de rainures concaves (18) et de rainures de blocage (16) dont les flancs se rapprochent l'un de l'autre vers le bas, chaque rainure concave précitée (18) étant disposée dans la direction verticale dudit pilier de support (10, 11) et étant raccordée par l'intermédiaire d'épaulements (19) à ladite rainure de blocage (16), les faces de contact dudit capot (5) étant pourvues de parties saillantes linéaires (20) en face des rainures concaves (18), et la partie inférieure de chaque partie saillante linéaire précitée formant ladite partie dilatée (17) dans ladite rainure de blocage (16).

4. Procédé d'assemblage de capot pour amener en contact et assembler un capot (5) avec des piliers de support avant et arrière (10, 11) qui font saillie d'un corps (1) d'un curseur pour un fermeture à glissière, ledit procédé d'assemblage de capot (5) comprenant les étapes consistant:
à former des rainures de blocage (16) sur les faces de contact soit dudit capot (5) soit desdits piliers de support (10, 11), ledit capot (5) ou bien lesdits piliers de support (10, 11) non pourvu(s) des rainures de blocage étant en un matériau ayant au moins la même dureté que ledit capot (5) ou bien lesdits piliers de support non pourvu(s) de ladite rainure,
à pousser de force ledit capot (5) vers lesdits piliers de support (10, 11) depuis leur position supérieure tout en maintenant les deux côtés dudit capot (5) dans la direction de la largeur à l'aide d'éléments de maintien (R) et à déformer ainsi de façon plastique soit lesdits piliers de support (10, 11) soit ledit capot (5) non pourvu(s) desdites rainures de blocage (16) afin de former des parties dilatées (17) à l'intérieur desdites rainures de blocage (16).

5. Procédé d'assemblage pour mettre en contact et assembler un capot (5) avec des piliers de support avant et arrière (10, 11) faisant saillie d'une corps (1) d'un curseur pour une fermeture à glissière, ledit procédé d'assemblage de capot (5) comprenant les étapes consistant:
à former des rainures de blocage (16) sur les faces verticales desdits piliers de support (10, 11),
à former des saillies (17') sur les faces externes du capot de recouvrement (5) en face desdites rainures de blocage (16) desdits piliers de support (10, 11), et
à presser lesdites saillies (17') vers l'intérieur de manière qu'elles fluent jusque dans lesdites rainures de blocage (16) après le recouvrement desdits piliers de support (10, 11) par ledit capot.

6. Procédé d'assemblage de capot d'un curseur pour une fermeture à glissière selon la revendication 5. ledit procédé comprenant les étapes consistant:
à former des rainures de blocage (16) sur les deux faces latérales d'un pilier de support avant (10) et une rainure de blocage (16) sur la face arrière d'un pilier de support arrière (11),
à former une dent (21) dans le capot (5) en face de la rainure de blocage arrière (16) dudit pilier de support arrière (11),
à assembler mutuellement par encliquetage ladite dent (21) dudit capot (5) avec ladite rainure de blocage (16) de la face arrière, et
à presser lesdites saillies (17) vers l'intérieur de manière qu'elles fluent dans lesdites rainures de blocage (16) desdits piliers de support après recouvrement des deux piliers de support précités (10; 11) avec ledit capot (5).
